(19) Europäisches Patentamt
European Patent Office
Office européen des brevets

(11) **EP 1 177 457 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(51) Int Cl.$^7$: **G01S 13/93**, G01S 7/40, G01S 17/93

(21) Anmeldenummer: 01909477.0

(22) Anmeldetag: **17.01.2001**

(86) Internationale Anmeldenummer:
**PCT/DE2001/000162**

(87) Internationale Veröffentlichungsnummer:
**WO 2001/061376 (23.08.2001 Gazette 2001/34)**

(54) **VERFAHREN ZUR KORREKTUR DES SICHTBEREICHES EINES ABSTANDSSENSORS BEI EINEM VON DER MITTELACHSE EINES KRAFTFAHRZEUGS VERSETZTEN EINBAU**

METHOD FOR CORRECTING THE VISUAL RANGE OF A DISTANCE SENSOR THAT IS ASSEMBLED IN SUCH A WAY THAT SAID SENSOR IS OFFSET FROM THE CENTRE LINE OF A MOTOR VEHICLE

PROCEDE POUR CORRIGER L'ETENDUE DE VISEE D'UN CAPTEUR DE DISTANCE MONTE AVEC UN DECALAGE PAR RAPPORT A L'AXE CENTRAL D'UN VEHICULE AUTOMOBILE

(84) Benannte Vertragsstaaten:
**DE FR GB**

(30) Priorität: **17.02.2000 DE 10007217**

(43) Veröffentlichungstag der Anmeldung:
**06.02.2002 Patentblatt 2002/06**

(73) Patentinhaber: **ROBERT BOSCH GMBH**
**70442 Stuttgart (DE)**

(72) Erfinder:
• **WINTER, Klaus**
**71701 Schwieberdingen (DE)**

• **WINNER, Hermann**
**76229 Karlsruhe (DE)**
• **LUEDER, Jens**
**70806 Kornwestheim (DE)**

(56) Entgegenhaltungen:
**EP-A- 0 443 643          EP-A- 0 526 424**
**EP-A- 0 859 425          EP-A- 0 905 526**
**WO-A-01/11387            WO-A-01/31362**
**DE-A- 19 707 590         JP-A- 11 316 278**
**US-A- 6 119 067**

## Beschreibung

### Stand der Technik

Die Erfindung geht aus von einem Verfahren zur Korrektur des Sichtbereiches eines Abstandssensors, der nicht mittig entlang der Mittelachse, sondern seitlich versetzt eingebaut wurde, nach der Gattung des Hauptanspruchs. Abstandssensoren, insbesondere auf der Basis eines Radar- oder Lidar-Sensors, werden an der Frontseite eines Kraftfahrzeugs eingesetzt, um insbesondere mit einer Geschwindigkeitsregelung stehende oder vorausfahrende und langsamere Fahrzeuge zu erfassen. Der Abstandssensor erfasst dabei in seinem Sichtbereich Entfernungen bis ca. 150 Meter und überdeckt ein Winkelbereich von etwa 10°. Die ideale Einbauposition für einen Sensor mit einem solch engen Sichtbereich ist die Mitte der Fahrzeugfront. Aus technischen und optischen Gründen steht dieser Bereich als Einbaumöglichkeit nicht immer zur Verfügung, sodass eine Position deutlich außerhalb der Fahrzeugmitte für den Einbau des Abstandssensors vorgenommen werden muß. Dieses führt wegen der Exentrizität neben einer schlechteren Ausleuchtung einer Seite im Nahbereich zu einem für den Fahrer spürbaren Unterschied im Detektionsverhalten bei Kurven, wenn dieser Abstandssensor parallel zur Fahrzeugachse ausgerichtet ist.

Aus dem japanischen Abstract JP 11-316278 ist ein Objektdetektionssystem bekannt, dessen Sensor bei der Montage mit einem seitlichen Versatz (Offset) gegenüber der Fahrzeuglängsachse montiert wird. Zur Justage des Sensorerfassungsbereichs wird in der Nähe des Fahrzeugs, jedoch auf der Fahrzeuglängsachse ein Zielreflektor positioniert und die Sensorstrahlzentralachse so ausgerichtet, dass diese die verlängerte Fahrzeuglängsachse dort kreuzt, wo der Zielreflektor positioniert ist. Mittels eines Computerprogramms wird dann der Offsetwinkel Theta berechnet und in dem Sensorgerät abgespeichert, so dass anschließend die Sensorstrahlzentralachse in der gewünschten Richtung ausgerichtet werden kann, nämlich dass diese parallel zu der verlängerten Fahrzeuglängsachse justiert ist.

### Vorteile der Erfindung

Das erfindungsgemäße Verfahren zur Korrektur des Sichtbereiches eines Abstandssensors ist im Anspruch 1 angegeben.

Durch die in den abhängigen Ansprüchen aufgeführten Maßnahmen sind vorteilhafte Weiterbildungen und Verbesserungen des im Hauptanspruch angegebenen Verfahrens möglich.

Da der Vorhaltewinkel praktisch bis 1° groß ist, fällt die Verstellung des Abstandssensors bei der Montage optisch kaum ins Gewicht, so dass dadurch keine Beeinträchtigung des Designs auftreten kann.

Als besonders vorteilhaft wird die Verwendung des Abstandssensors in Verbindung mit einem Geschwindigkeitsregler angesehen, so dass durch fortlaufende Überwachung des Sicherheitsabstandes unter Berücksichtigung der Fahrgeschwindigkeit, insbesondere bei einer Kolonnenfahrt, der Fahrer entlastet werden kann.

### Zeichnung

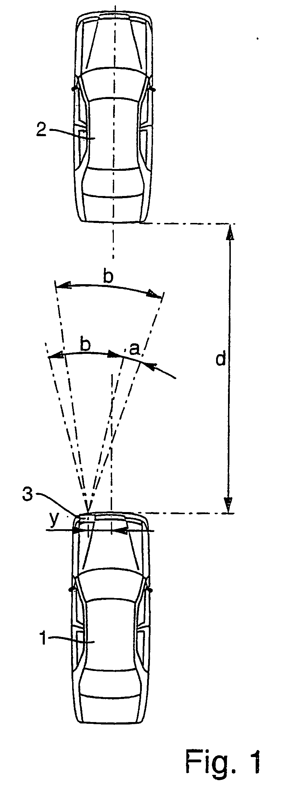

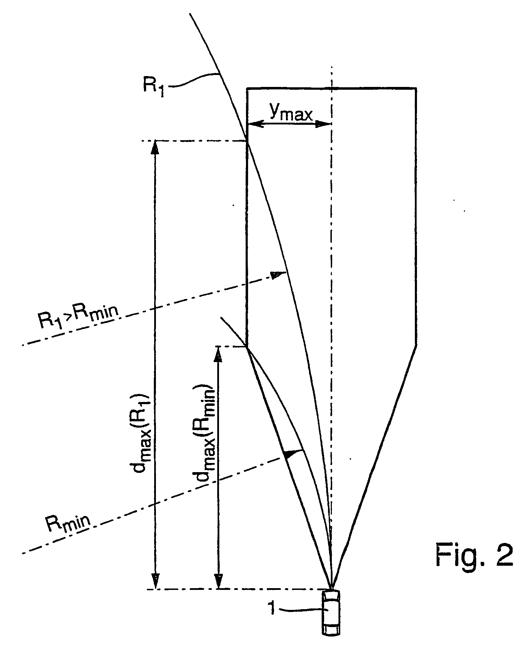

Ein Ausführungsbeispiel ist in der Zeichnung dargestellt und in der nachfolgenden Beschreibung näher erläutert. Figur 1 zeigt eine Skizze mit einer Fahrzeuganordnung und Figur 2 zeigt eine Skizze zur Bestimmung des Vorhaltewinkels.

### Beschreibung

Figur 1 zeigt eine Fahrzeuganordnung auf einer Straße, bei dem ein Kraftfahrzeug 1 mittels eines Abstandssensors 3 ein Hindernis mit einem Abstand d, beispielsweise ein vorausfahrendes Kraftfahrzeug 2, erfaßt. Der Abstandssensor 3 wurde an der Frontseite des Kraftfahrzeugs 1 nicht mittig, sondern mit einer Exzentrizität y, beispielsweise auf der linken Seite versetzt angebaut. Die Antennen sind auf die Straße in Fahrtrichtung ausgerichtet. Der Abstandssensor 3 hätte einen Sichtbereich mit einem Sichtwinkel b, wie in der Figur 1 gestrichelt dargestellt ist, wenn er parallel zur Mittelachse M des Fahrzeugs eingebaut wäre. Dieser gestrichelt dargestellte Sichtbereich entspricht einer üblichen Ausrichtung des Abstandssensors 3 zur Mittelachse M des Fahrzeugs.

Wie der Figur 1 weiterhin entnehmbar ist, würde der Abstandssensor 3 innerhalb seines gestrichelt dargestellten Sichtbereichs das vorausfahrende Kraftfahrzeug 2 lediglich im rechten Bereich seines Sichtbereiches erfassen, obgleich beide Fahrzeuge entlang der gedachten Mittelachse M fahren. Bei Kurvenfahrten, insbesondere bei einer Linkskurve mit entsprechend engem Radius könnte es sein, dass das vorausfahrende Kraftfahrzeug 2 nicht mehr erfasst werden kann, da es den Sichtbereich verlässt.

Abstandssensoren 3 sind per se bekannt und arbeiten nach dem Reflektionsprinzip aufgrund von gesendeten Radar- oder Lichtstrahlen. Um auch größere Abstände bis 150 Meter oder mehr bestimmen zu können, haben sie einen relativ engen Öffnungswinkel von etwa 10°. Um dennoch möglichst alle Hindernisse in Fahrtrichtung des Kraftfahrzeugs 1 zu erfassen, wird erfindungsgemäß vorgeschlagen, den Abstandssensor 3 beim Einbau im Werk oder in der Werkstatt mit einem Vorhaltewinkel a einzubauen, der zur Mittelachse ausgerichtet ist. Dadurch verschiebt sich der Sichtbereich mit dem Öffnungswinkel b, wie den ausgezogenen Strahlengängen der Figur 1 entnehmbar ist. Das vorausfahrende Kraftfahrzeug 2 wird somit etwa in der Mitte des Sichtbereiches erfasst. Insbesondere bei Kurvenfahrten ist nun die Wahrscheinlichkeit größer, dass das vorausfahrende Kraftfahrzeug 2 kontinuierlich erfasst wird und somit der Abstandssensor 3 zuverlässiger den Abstand d bestimmen kann. Das Risiko eines Zielverlustes in Kurven rechts wie auch links ist nun in etwa gleich groß.

Die Bestimmung des Vorhaltewinkels a kann auf zwei Arten erfolgen. Eine sehr einfache Art ist die empirische Ermittlung des Sichtbereiches in Abhängigkeit vom Abstand d durch die jeweilige Messung. Entsprechend der Werte lassen sie sich in einem Speicher ablegen und sind dann für die spätere Auswertung verfügbar.

Alternativ kann der Vorhaltewinkel a auch durch Abschätzung bestimmt werden. Die Funktionsweise wird nachfolgend anhand der Figur 2 näher erläutert.

Wie schon erwähnt, steht auch bei der Berechnung die Überlegung zugrunde, dass bei einer Rechtswie auch einer Linkskurve Detektionsverluste in etwa mit gleichem Radius beginnen. Unter der Annahme, dass der Abstandssensor 3 in Verbindung mit einem Geschwindigkeitsregler ACC kombiniert ist, ergibt sich ein minimaler Kurvenradius $R_{min}$ der Fahrtstrecke, bei dem ein Zielverlust auftreten kann. Dieser Zielverlust ist u. a. abhängig vom Abstand d zum Hindernis.

Figur 2 zeigt nun einen Ausschnitt aus einem Straßensegment, in dem der minimale Radius $R_{min}$ und ein größerer Radius $R_1$ für eine Linkskurve eingezeichnet sind. Des Weiteren sind die zugehörigen maximalen Abstände $d_{max}(R_{min})$, $d_{max}(R_1)$ zu den Radien $R_{min}$ bzw. $R_1$ dargestellt. Dabei wurden die maximalen Abstände unter der Annahme bestimmt, dass für eine maximale Querbeschleunigung des Kraftfahrzeugs 1 eine maximale Kurvengeschwindigkeit vorgegeben wird. Diese maximale Kurvengeschwindigkeit wird mit einer Vorschauzeitlücke $\tau_{max}$ multipliziert, so dass man daraus die maximale Reichweite $d_{max}(R)$ bzw. den maximalen Abstand zum Hindernis erhält. Die maximale Breite $y_{max}$ des Sichtfeldes zu einer Seite beim maximalen Abstand $d_{max}$ ist dabei unabhängig vom Kurvenradius:

$$y_{max} = \frac{1}{2} * \tau_{max}^{2} * a_{lateral, max},$$

wobei $a_{lateral,max}$ die maximale Querbeschleunigung ist.

Der Vorhaltewinkel a wird aus dem Quotienten der Exentrizität y und der maximalen Reichweite $d_{max}$ bei $R = R_{min}$ bestimmt. So ist der Sichtbereich in dieser Entfernung in guter Näherung symmetrisch bezüglich der Fahrzeuglängsachse.

$$d_{max}(R_{min}) = \tau_{max} * \sqrt{a_{lateral,max} * R_{min}}$$

Der Vorhaltewinkel a ergibt sich

$$a \cong Y / d_{max}(R_{min})$$

Anhand eines Zahlenbeispiels ergibt sich für den Vorhaltewinkel

$$a \cong y/47 \text{ m bzw. } a \cong 1{,}2° * y/m,$$

wenn für $R_{min}$ = 500 m, die Querbeschleunigung $a_{lateral}$ = 2 m/s² und $\tau$ = 1,5 s für typische Situationen angenommen wird. Beispielsweise ergibt sich für y = 0,50 m ein Vorhaltewinkel a = 0,6°, mit dem der Abstandssensor 3 zur Mittelachse M hin werksseitig eingestellt werden kann.

**Patentansprüche**

1. Verfahren zur Korrektur des Sichtbereiches eines Abstandssensors (3), der mit einer Exentrizität (y) seitlich versetzt zur Mittelachse (M) des Kraftfahrzeugs (1) angebaut ist und ein Hindernis (2) innerhalb seines Sichtbereiches mit einem Winkel (b) erfasst und dessen Abstand (d) und/oder Lage relativ zum Kraftfahrzeug (1) bestimmt, wobei der Abstandssensor (3) mit einem Vorhaltewinkel (a) zur Mittelachse (M) des Kraftfahrzeugs (1) ausgerichtet ist, **dadurch gekennzeichnet, dass** der Vorhaltewinkel (a) in Abhängigkeit von der Exentrizität (y) nach der Gleichung:

$$a = y / (\tau_{max} \cdot \sqrt{a_{lateral,max} \cdot R_{min}})$$

bestimmt ist, wobei die Exzentrizität y der Abstand des Sensors von der Fahrzeuglängsachse, $\tau_{max}$ die Vorschauzeitlücke, $a_{lateral,max}$ die maximale Querbeschleunigung und $R_{min}$ der minimale Kurvenradius ist.

2. Verfahren nach einem der vorhergehenden Ansprüche, **dadurch gekennzeichnet, dass** der Vorhaltewinkel (a) so gewählt wird, dass er bei einer Rechts- und einer Linkskurve etwa den gleichen Sichtbereich abdeckt.

3. Verfahren nach einem der vorhergehenden Ansprüche, **dadurch gekennzeichnet, dass** der Vorhaltewinkel (a) bis etwa 1° groß ist.

4. Verfahren nach einem der vorhergehenden Ansprüche, **dadurch gekennzeichnet, dass** der Vorhaltewinkel (a) bei der Montage des Abstandssensors (3) in das Kraftfahrzeug fest eingestellt wird.

5. Verwendung des Verfahrens nach einem der vorhergehenden Ansprüche für einen Geschwindigkeitsregler.

## Claims

1. Method for correction of the viewing area of a proximity sensor (3) which is fitted eccentrically (y) with a lateral offset with respect to the centre axis (M) of the motor vehicle (1) and detects an obstruction (2) within its viewing area at an angle (b), and determines its distance (d) and/or position relative to the motor vehicle (1), with the proximity sensor (3) being aligned with a lead angle (a) with respect to the centre axis (M) of the motor vehicle (1), **characterized in that** the lead angle (a) is determined as a function of the eccentricity (y) using the equation:

$$A = y / (\tau_{max} \cdot \sqrt{a_{lateral,max} \cdot R_{min}})$$

where the eccentricity y is the distance between the sensor and the vehicle longitudinal axis, $\tau_{max}$ is the advance time gap, $a_{lateral,max}$ is the maximum lateral acceleration, and $R_{min}$ is the minimum turning radius.

2. Method according to one of the preceding claims, **characterized in that** the lead angle (a) is chosen such that it covers approximately the same viewing area when turning to the right and when turning to the left.

3. Method according to one of the preceding claims, **characterized in that** the lead angle (a) has a magnitude of up to about 1°.

4. Method according to one of the preceding claims, **characterized in that** the lead angle (a) is set during installation of the proximity sensor (3) into the motor vehicle.

5. Use of the method according to one of the preceding claims for a cruise control.

## Revendications

1. Procédé pour corriger la portée optique d'un capteur de distance (3), monté décalé latéralement d'une excentricité (y) par rapport à l'axe central (M) du véhicule automobile (1), qui à l'intérieur de la portée optique détecte selon un angle (b) un obstacle (2) et qui détermine sa distance (d) et/ou sa position par rapport au véhicule automobile (1), le capteur de distance (3) étant orienté selon un angle de dérivation (a) par rapport à l'axe central (M) du véhicule automobile (1), **caractérisé en ce que** l'angle de dérivation (a) est déterminé en fonction de l'excentricité (y) d'après l'équation :

$$a = y(\tau_{max}\sqrt{a_{lateral,max} \cdot R_{min}})$$

l'excentricité y étant la distance du capteur par rapport à l'axe du véhicule, $\tau_{max}$ le temps de latence, $a_{lateral,max}$ l'accélération transversale maximale et $R_{min}$ le rayon minimal du virage.

2. Procédé selon la revendication 1, **caractérisé en ce que** l'angle de dérivation (a) est choisi de manière qu'il couvre à peu près la même portée optique pour un virage à droite que pour un virage à gauche.

3. Procédé selon l'une des revendications précédentes, **caractérisé en ce que** l'angle de dérivation (a) peut atteindre environ 1°.

4. Procédé selon l'une des revendications précédentes, **caractérisé en ce que** l'angle de dérivation (a) est durablement réglé lorsqu'on monte le capteur de distance (3) sur le véhicule automobile.

5. Utilisation du procédé selon l'une des revendications précédentes pour un régulateur de vitesse.

Fig. 1

$R_1$

$y_{max}$

$R_1 > R_{min}$

$R_{min}$

$d_{max}(R_1)$

$d_{max}(R_{min})$

1

Fig. 2